# DEMANDE DE BREVET EUROPEEN

(11) **EP 4 521 276 A1**
(43) Date de publication de la demande: **12.03.2025**
(21) Numéro de dépôt: 24197126.6
(22) Date de dépôt: 29.08.2024
(51) Int. Cl.: G06F 21/52, G06F 21/55

(54) **MODULE DE SURVEILLANCE D'INSTRUCTIONS**

(30) Priorité: 06.09.2023 FR 2309347
(71) Demandeur: STMicroelectronics International N.V., 1228 Plan-les-Ouates, Geneva (CH)
(72) Inventeur: GIOVANNINI, Michael, 38000 Grenoble (FR)
(74) Mandataire: Cabinet Beaumont

(57) **Abrégé**

La présente description concerne un module de surveillance d'instructions (201) d'un microcontrôleur (202), adapté à vérifier des instructions reçues sur une borne d'entrée dudit microcontrôleur (202) ou des instructions en cours de traitement par un pointeur de code dudit microcontrôleur (202).

## Description

### Domaine technique

La présente description concerne de façon générale les circuits et dispositifs électroniques, et la protection des circuits et dispositifs électroniques contre des attaques malveillantes. La présente description concerne plus précisément, la protection d'un circuit électronique complexe comme un processeur ou un microcontrôleur.

### Technique antérieure

Les circuits électroniques complexes sont des circuits adaptés à mettre en oeuvre un ou plusieurs fonctions complexes, comme la réalisation de calculs complexes à partir de données et d'instructions reçues. Les processeurs et les microcontrôleurs sont des circuits électroniques complexes, et sont tout particulièrement adaptés à recevoir des instructions, à les décoder, et à les mettre en oeuvre.

Il serait souhaitable de pouvoir améliorer, au moins en partie, certains aspects de la protection des circuits électroniques complexes comme les processeurs ou les microcontrôleurs.

### Résumé de l'invention

Il existe un besoin pour une protection plus sûre des circuits électroniques complexes, comme les processeurs et les microcontrôleurs.

Il existe un besoin pour un module de surveillance d'instructions reçues par un circuit électronique complexe.

Il existe un besoin pour un module de surveillance d'instructions en cours de traitement par un circuit électronique complexe.

Un mode de réalisation pallie tout ou partie des inconvénients des modules de surveillance d'instructions.

Un mode de réalisation pallie tout ou partie des inconvénients des procédés de surveillance d'instructions d'un circuit électronique complexe.

Un mode de réalisation pallie tout ou partie des inconvénients des dispositifs électroniques comprenant des circuits électroniques complexes connus.

Un mode de réalisation prévoit un module de surveillance d'instructions d'un microcontrôleur, adapté à vérifier des instructions reçues sur une borne d'entrée dudit microcontrôleur ou des instructions en cours de traitement par un pointeur de code dudit microcontrôleur.

Un autre mode de réalisation prévoit un procédé de vérification d'instructions d'un microcontrôleur, mis en oeuvre par un module de surveillance, comprenant une étape de vérification des instructions reçues au niveau d'une borne d'entrée dudit microcontrôleur ou des instructions en cours de traitement par un pointeur de code dudit microcontrôleur.

Selon un mode de réalisation, si la vérification indique que les instructions sont valides alors leur réception ou leur traitement peut continuer.

Selon un mode de réalisation, si la vérification indique que les instructions ne sont pas valides alors le microcontrôleur est passé dans un mode d'erreur, ou un mode sécurisé ou un mode semi-sécurisé.

Selon un mode de réalisation, la vérification est mise en oeuvre par une comparaison d'au moins une donnée correspondant auxdites instructions à une donnée de référence.

Selon un mode de réalisation, lorsque la vérification est une vérification des instructions reçues sur ladite borne d'entrée dudit microcontrôleur, la donnée de référence est égale à la donnée "OxFFFFFFFF".

Selon un mode de réalisation, lorsque la vérification est une vérification des instructions en cours de traitement par un pointeur de code dudit microcontrôleur, la donnée de référence est égale à la donnée "0xF0000002".

Selon un mode de réalisation, ladite borne d'entrée dudit microcontrôleur est une borne de connexion à un bus de données.

Selon un mode de réalisation, le bus de données est un bus de communication de type Advanced High-performance Bus.

Selon un mode de réalisation, le bus de données est un bus de communication de type Advanced extensible Interface.

Selon un mode de réalisation, lesdites instructions proviennent d'une mémoire.

Selon un mode de réalisation, ladite mémoire est une mémoire non volatile.

Selon un mode de réalisation, ladite mémoire est une mémoire vive de type flash.

Un autre mode de réalisation prévoit un dispositif électronique comprenant un module décrit précédemment.

Selon un mode de réalisation, le dispositif comprend, en outre, ledit microcontrôleur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, très schématiquement et sous forme de blocs, un exemple d'un dispositif adapté à comprendre les modes de réalisation décrits ci-après ;
la figure 2 représente, très schématiquement et sous forme de blocs, un mode de réalisation d'un premier module de surveillance ; et
la figure 3 représente, très schématiquement et sous forme de blocs, un mode de réalisation d'un deuxième module de surveillance.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

Les modes de réalisation décrits ci-après concernent la sécurité des circuits électroniques complexes comme les processeurs et les microcontrôleurs recevant des instructions. Les modes de réalisation décrits ci-après concernent plus particulièrement un module de surveillance d'instructions reçues ou en cours de traitement par un circuit électronique complexe, et le procédé de surveillance d'instructions correspondant.

Le module de surveillance est tout particulièrement adapté à vérifier qu'une instruction reçue ou en cours de traitement, par le circuit électronique complexe, est valide. Si une telle instruction n'est pas valide alors ledit module de surveillance interrompt la réception et/ou le traitement de ladite instruction. L'utilisation d'un tel module de surveillance permet d'éviter des attaques malveillantes consistant en la substitution d'instructions valides par des instructions non valides permettant, par exemple, de modifier le fonctionnement du circuit électronique complexe.

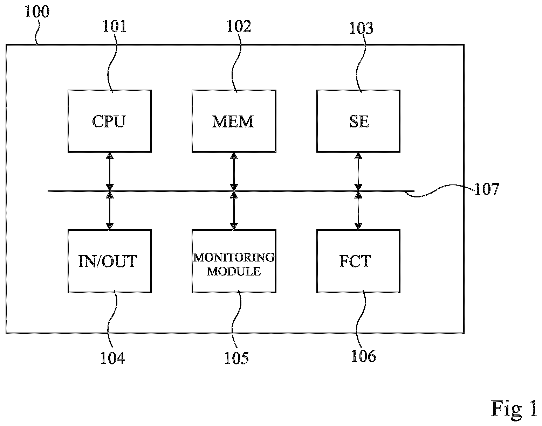

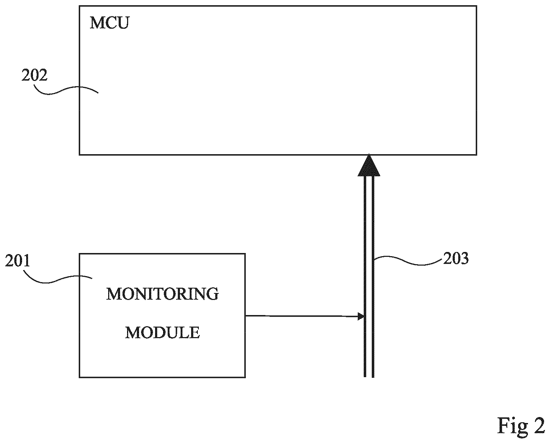

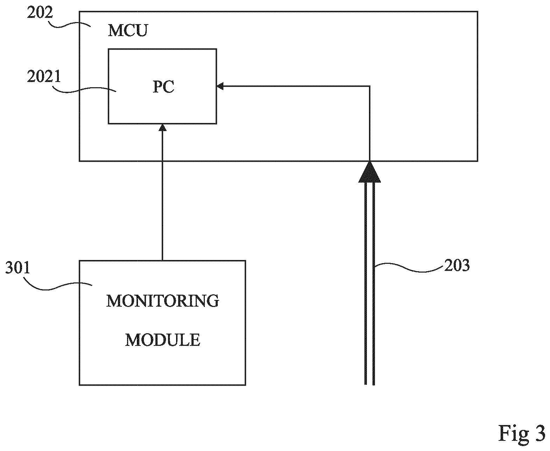

La figure 1 est un schéma bloc représentant, très schématiquement, une architecture d'un exemple d'un dispositif électronique 100 adapté à comprendre les modes de réalisation décrits en relation avec les figures 2 et 3.

Selon un mode de réalisation, le dispositif 100 comprend un circuit électronique complexe 101 (MCU) adapté à mettre en oeuvre différents traitements de données stockées dans des mémoires et/ou fournies par d'autres circuits du dispositif 100. Selon un mode de réalisation, le circuit électronique complexe 101 est un processeur ou un microcontrôleur. Selon un mode de réalisation préféré, le circuit 101 est un microcontrôleur.

Selon un exemple, le dispositif 100 peut comprendre, en outre, une ou plusieurs de mémoires 102 (MEM), par exemple des mémoires de différents types, parmi lesquelles, par exemple, une mémoire vive, une mémoire non volatile, une mémoire volatile, et/ou une mémoire morte. Selon un exemple préféré, le dispositif 100 comprend au moins une mémoire non volatile et/ou une mémoire vive de type flash.

Selon un exemple, le dispositif 100 peut comprendre, en outre, un élément sécurisé 103 (SE) adapté à traiter des données sensibles et/ou secrètes. L'élément sécurisé 103 peut comprendre son ou ses propres processeurs, sa ou ses propres mémoires, etc.

Selon un exemple, le dispositif 100 peut comprendre, en outre, des circuits d'entrée/sortie 104 (IN/OUT) adapté à permettre au dispositif 100 de communiquer avec un ou plusieurs dispositifs électroniques extérieurs.

Selon un mode de réalisation, le dispositif 100 comprend un module de surveillance d'instructions 105 (MONITORING MODULE) reçues et/ou en cours de traitement par le circuit complexe 101. Deux modes de réalisation du module 105 et leurs fonctionnements sont décrits en détails en relation avec les figures 2 et 3.

Selon un exemple, le dispositif 100 peut comprendre, en outre, différents circuits 106 (FCT2) adaptés à réaliser différentes fonctions. A titre d'exemple, les circuits 106 peuvent comprendre des circuits de mesure, des circuits de conversion de données, des circuits de commande d'équipement électronique ou électromécanique, etc.

Selon un mode de réalisation, le dispositif 100 comprend, en outre, un ou plusieurs moyens 107 de communication de données adaptés à transférer des données entre les différents dispositifs électroniques.

Selon un mode de réalisation, un moyen 107 utilisé pour transmettre des données et des instructions au circuit complexe 101 est un bus de communication de type Advanced High-performance Bus (AHB), c'est-à-dire un bus avancé à haute performance destiné à la communication, par l'intermédiaire d'un seul canal, de circuits au sein d'un système électronique sur puce.

Selon un autre mode de réalisation, un moyen 107 utilisé pour transmettre des données et des instructions au circuit complexe 101 est un bus de communication de type Advanced extensible Interface (AXI), c'est-à-dire une interface avancée extensible destinée à la communication, par l'intermédiaire de plusieurs canaux, de circuits au sein d'un système électronique sur puce.

La figure 2 est un schéma bloc représentant, très schématiquement, un module de surveillance 201 (Monitoring MODULE), du type du module de surveillance 105 décrit en relation avec la figure 105, et un circuit électronique complexe 202 (MCU), appelé ci-après microcontrôleur 202, du type du circuit électronique complexe 101 décrit en relation avec la figure 1.

Le module de surveillance 201 est adapté à surveiller les instructions reçues par le microcontrôleur 202. Plus particulièrement, le module de surveillance 201 est adapté à recevoir les instructions reçues que le microcontrôleur 202 reçoit par l'intermédiaire d'un bus de données 203. Selon un mode de réalisation, les instructions proviennent d'une mémoire, comme par exemple, une mémoire non volatile ou une mémoire vive de type flash.

Le module de surveillance 201 est, en outre, adapté à effectuer une vérification de ces instructions pour déterminer si les instructions sont valides ou non. On dit ici qu'une instruction valide est une instruction correcte destinée au microcontrôleur, et qu'une instruction non valide est une instruction qui est générée par un personne malveillante, et qui est destinée à obtenir des informations sur le fonctionnement du microcontrôleur et/ou à modifier le comportement du microcontrôleur.

Selon un mode de réalisation, la vérification effectuée par le module 201 est une comparaison des instructions reçues avec des instructions non valides connues. Pour cela, le module 201 compare des données formant les instructions reçues avec des données de référence. Selon un mode de réalisation, le module 201 compare les données des instructions avec la donnée hexadécimale "OxFFFFFFFF".

Si le résultat de la vérification indique que les instructions sont valides, le module 201 n'interrompt pas la réception des instructions par le microcontrôleur 202. A l'inverse, si le résultat de la vérification indique que les instructions ne sont pas valides, le module 201 peut faire entrer le microcontrôleur dans un mode d'erreur ou un mode sécurisé ou semi-sécurisé, dans lequel les données sensibles, comme les clés de chiffrement et/ou de déchiffrement, sont rendues inaccessibles. De plus, le module 201 peut en informer un autre module adapté à traiter les erreurs.

Ainsi, un procédé de surveillance mettant en oeuvre le module 201 est le suivant. A chaque réception d'instructions par le microcontrôleur 202, une étape de vérification de ces instructions est mise en oeuvre par le module 201 pour vérifier la validité des instructions. Le module 201 interrompt, ou non, la réception des instructions en fonction du résultat de la vérification.

La figure 3 est un schéma bloc représentant, très schématiquement, un module de surveillance 301 (Monitoring MODULE), du type du module de surveillance 105 décrit en relation avec la figure 105, et le circuit électronique complexe 202 (MCU) décrit en relation avec la figure 2.

Le module de surveillance 301 est adapté à surveiller les instructions en cours de traitement par le microcontrôleur 202. Plus particulièrement, le module de surveillance 301 est adapté à recevoir les instructions en cours de traitement que le microcontrôleur 202 commence à décoder à l'aide de son pointeur de code 2021 (PC). En effet, toute instruction reçue par le microcontrôleur 202 est, dans un premier temps, décodée par le pointeur de code 2021, pour être, en suite, effectivement traitée par un ou plusieurs circuits internes du microcontrôleur.

Comme le module 201 de la figure 2, le module de surveillance 301 est, en outre, adapté à effectuer une vérification de ces instructions pour déterminer si les instructions sont valides ou non.

Selon un mode de réalisation, la vérification effectuée par le module 301 est une comparaison des instructions reçues avec des instructions non valides connues. Pour cela, le module 301 compare des données formant les instructions reçues avec des données de référence. Selon un mode de réalisation, le module 301 compare les données des instructions avec la donnée hexadécimale "0xF0000002".

Si le résultat de la vérification indique que les instructions sont valides, le module 301 n'interrompt pas la décodage des instructions par le pointeur de code 2021 du microcontrôleur 202. A l'inverse, si le résultat de la vérification indique que les instructions ne sont pas valides, le module 301 empêche le décodage des instructions par le pointeur de code 2021 du microcontrôleur 202.

Ainsi, un procédé de surveillance mettant en oeuvre le module 301 est le suivant. A chaque traitement d'instructions par le microcontrôleur 202, c'est-à-dire à chaque décodage d'instructions par le pointeur de code 2021 du microcontrôleur 202, une étape de vérification de ces instructions est mise en oeuvre par le module 301 pour vérifier la validité des instructions. Le module 301 interrompt, ou non, la réception des instructions en fonction du résultat de la vérification.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, il est aussi envisagé un module de surveillance combinant les propriétés des modules 201 de la figure 2 et 301 de la figure 3.

Enfin, la mise en oeuvre pratique des modes de réalisation et variantes décrits est à la portée de la personne du métier à partir des indications fonctionnelles données ci-dessus.

## Revendications

1. Module de surveillance d'instructions (105 ; 201 ; 301) d'un microcontrôleur (101 ; 202), adapté à vérifier des instructions reçues sur une borne d'entrée dudit microcontrôleur (101 ; 202) ou des instructions en cours de traitement par un pointeur de code (2021) dudit microcontrôleur (101 ; 202).

2. Procédé de vérification d'instructions d'un microcontrôleur (101 ; 202), mis en oeuvre par un module de surveillance (105 ; 201 ; 301), comprenant une étape de vérification des instructions reçues au niveau d'une borne d'entrée dudit microcontrôleur (101 ; 202) ou des instructions en cours de traitement par un pointeur de code (2021) dudit microcontrôleur (101 ; 202).

3. Module selon la revendication 1, ou procédé selon la revendication 2, dans lequel si la vérification indique que les instructions sont valides alors leur réception ou leur traitement peut continuer.

4. Module selon la revendication 1 ou 3, ou procédé selon la revendication 2 ou 3, dans lequel si la vérification indique que les instructions ne sont pas valides alors le microcontrôleur est passé dans un mode d'erreur, ou un mode sécurisé ou un mode semi-sécurisé.

5. Module selon l'une quelconque des revendications 1, 3 et 4, ou procédé selon l'une quelconque des revendications 2 à 4, dans lequel la vérification est mise en oeuvre par une comparaison d'au moins une donnée correspondant auxdites instructions à une donnée de référence.

6. Module ou procédé selon la revendication 5, dans lequel, lorsque la vérification est une vérification des instructions reçues sur ladite borne d'entrée dudit microcontrôleur (101 ; 202), la donnée de référence est égale à la donnée "OxFFFFFFFF".

7. Module ou procédé selon la revendication 5 ou 6, dans lequel, lorsque la vérification est une vérification des instructions en cours de traitement par un pointeur de code (2021) dudit microcontrôleur (101 ; 202), la donnée de référence est égale à la donnée "0xF0000002".

8. Module selon l'une quelconque des revendications 1, 3 à 7, ou procédé selon l'une quelconque des revendications 2 à 7, dans lequel ladite borne d'entrée dudit microcontrôleur (101 ; 202) est une borne de connexion à un bus de données (107 ; 203).

9. Module selon l'une quelconque des revendications 1, 3 à 8, ou procédé selon l'une quelconque des revendications 2 à 8, dans lequel le bus de données est un bus de communication (107 ; 203) de type Advanced High-performance Bus (AHB).

10. Module selon l'une quelconque des revendications 1, 3 à 8, ou procédé selon l'une quelconque des revendications 2 à 8, dans lequel le bus de données est un bus de communication (107 ; 203) de type Advanced extensible Interface (AXI).

11. Module selon l'une quelconque des revendications 1, 3 à 10, ou procédé selon l'une quelconque des revendications 2 à 10, dans lequel lesdites instructions proviennent d'une mémoire (102).

12. Module ou procédé selon la revendication 11, dans lequel ladite mémoire (102) est une mémoire non volatile.

13. Module ou procédé selon la revendication 11, dans lequel ladite mémoire (102) est une mémoire vive de type flash.

14. Dispositif électronique comprenant un module selon l'une quelconque des revendications 1, 3 à 13.

15. Dispositif selon la revendication 14, comprenant, en outre, ledit microcontrôleur (101 ; 202).
